# EUROPEAN PATENT APPLICATION

(11) **EP 4 838 423 A1**
(43) Date of publication of application: **11.11.2026**
(21) Application number: 25174874.5
(22) Date of filing: 07.05.2025
(51) Int. Cl.: G06N 5/022, G06F 16/901

(54) **METHOD FOR DETERMINING AN EXECUTABLE KNOWLEDGE GRAPH IN AN INDUSTRIAL APPLICATION**

(71) Applicant: ABB SCHWEIZ AG, 5400 Baden (CH)
(72) Inventor: BORRISON, Reuben, 68782 Brühl (DE); SCHOCH, Nicolai, 69120 Heidelberg (DE)
(74) Representative: Maiwald GmbH

(57) **Abstract**

The disclosure relates to a computer implemented method for determining an executable knowledge graph (EKG) in an industrial application, the method comprises obtaining (S11), by an input unit (10), a knowledge graph (KG) reflecting the industrial application, wherein the knowledge graph (KG) comprises a plurality of nodes and a relationship between the plurality of nodes, receiving (S12), by the input unit (10), a user query of a user, wherein the user query is configured to extract knowledge from the knowledge graph (KG), extending (S13), by a process unit (20), the knowledge graph (KG) to an executable knowledge graph (EKG) by determining at least one executable node for the knowledge graph (KG) based on properties of the knowledge graph (KG) and/or the properties of the user query, wherein the at least one executable node is connecting a plurality of input nodes with a plurality of output nodes, wherein the plurality of nodes comprises the plurality of input nodes and the plurality of output nodes, wherein the at least one executable node is configured to execute an algorithm determining an association between at least one of the plurality of input nodes and at least one of the plurality of output nodes.

## Description

### FIELD OF THE INVENTION

The invention relates to determining an executable knowledge graph in an industrial application as well as a corresponding device, computer program and computer-readable storage medium.

### BACKGROUND

Structured engineering information are usually used by the engineers for quicker setup of automation and control systems and at times quicker resolving of the issues. This information can also benefit during operations of the plants as it provides an overview of what assets the plants have and what process data is generated. The statistical information however often is not available or usable, as it would require extensive data curation efforts. Therefore, Process Automation Engineering, P&A Eng, and Operations are missing valuable information for actionable insights. Thus, the knowledge graphs of industrial applications may not have a beneficial output for the operator.

Consequently, there is a need for improved knowledge graphs in industrial applications.

### SUMMARY

The above problem is solved or alleviated by the subject matters of the independent claims of the present disclosure, wherein further examples are incorporated in the dependent claims.

According to an aspect of the invention, a computer implemented method for determining an executable knowledge graph in an industrial application is provided.

In a step of the method, a knowledge graph reflecting the industrial application is obtained by an input unit, wherein the knowledge graph comprises a plurality of nodes and a relationship between the plurality of nodes.

In next step, a user query of a user is received by the input unit, wherein the user query is configured to extract knowledge from the knowledge graph.

In next step, the knowledge graph is extended by a process unit to an executable knowledge graph by determining at least one node of the knowledge graph to be an executable node and converting it into an executable node for the knowledge graph based on properties of the knowledge graph and/or properties of the user query. The at least one executable node is connecting at least two nodes of knowledge graph. The at least one executable node is configured to execute an algorithm determining an association between at least two nodes of knowledge graph.

The industrial application is an implementation of a system, method, or technology within the operational environment of an industrial plant. It may involve the integration of software, hardware, and data-driven tools into industrial processes such as production, control, monitoring, and maintenance.

The knowledge graph is a structured representation of entities and their interrelations within a defined domain, modeled as a network of nodes connected by edges. The knowledge graph may capture and organizes data about plant components, processes, systems, documentation, and their interdependencies. The graph format allows for semantic modeling, where each entity e.g., equipment, sensor, or process is formally described and connected to others through well-defined relationships.

The knowledge graph may be based on a domain information model, domain knowledge graph from Engineering domain e.g., a knowledge graph about automation engineering data and/or how typical customer design specifications relate to the to-be-engineered process plant, or from operations domain, e.g., from an Alarm-Management context, detailing which alarms need to fire and with which severities and under which conditions or others.

The knowledge graph comprises a certain domain of interest, with the graph being related to a plurality of ontologies or information models, and with the graph being linked to instance data, i.e., a graph database or relational database.

The executable knowledge graph is a knowledge graph comprising at least one executable node.

The node in a knowledge graph can represent a discrete entity, feature, property or concept relevant to the industrial plant. This can include physical components (in form of digital twins) e.g., a motor or valve, a process e.g., heating or mixing, an operational parameter e.g., temperature or pressure, a logical construct e.g., a control strategy or failure mode, digital artifacts e.g., documents or sensor data, or any identifiable unit of knowledge that can be referenced and described. Each node is uniquely identifiable and may have associated metadata or attributes. Each node captures specific information and is connected to other nodes through relationships, enabling a structured, interconnected view of plant's physical assets, workflows, and knowledge.

The relationship between nodes in the knowledge graph defines semantic connection between two entities. These relationships can express various associations such as "is part of," "controls," "is maintained by," or "measures" Each relationship is directional and may have a specific type and properties that further describe the nature of the connection between the source and target nodes.

The executable node is a node within the knowledge graph that contains or references algorithm, logic, code, or a defined operation that can be triggered and run within an execution environment. This comprises analytical models, control scripts, simulations, or workflow definitions that act on data or other nodes when executed.

Converting a node into an executable node comprises augmenting a standard knowledge graph node with an algorithm, an executable logic or linking it to a computational resource capable of performing an action.

The executable knowledge graph presents more value-added services to the customers than a static knowledge graph. The executable knowledge graph enables a more transparent and global knowledge graph. In addition, the machine learning models can be re-used across multiple industrial applications.

The user query comprises a structured or unstructured request issued by a user or system to retrieve, analyse, or act upon information represented in the knowledge graph of an industrial plant. Queries may be expressed in natural language, formal query languages e.g., SPARQL, or through user interfaces e.g., input unit, and are interpreted that map the request to relevant nodes and/or relationships.

Extending the knowledge graph comprises enriching the knowledge graph with at least one executable node.

The association between at least two nodes of knowledge graph comprises at least one root between two nodes of knowledge graph. The association may be a root cause analysis between two nodes.

The user may be an engineer, an operator or a plant owner.

The method is based on a knowledge graph and comprises adding executable algorithms or software tools, such as ML models to the graph's nodes.

The proposed method may be used, e.g., for finding root cases, by helping to find an intelligent path in the knowledge graph to link nodes, for pattern or correlation analysis by helping to identify the yet-unknown correlations between nodes (concepts along with their relations and/or instance data) in the knowledge graph or for simulation execution.

Additionally, the method may be used for gathering data. In other words, the method may be used to interpolate and/or extrapolate data, or to find patterns and auto-completing it.

This method enriches the information within the knowledge graph using the executable nodes, enabling actionable insights for the user. It provides a smarter, more intelligent knowledge graph that assists the user in making informed decisions. Moreover, decision criteria can be stored or learned through interactions with the knowledge graph.

Consequently, improved knowledge graphs in industrial applications can be determined.

Preferably, the properties of the knowledge graph may comprise at least one of ontology of the knowledge graph, semantic properties of the plurality of nodes and contextual relationships between the user query and the plurality of nodes, and wherein the properties of the user query comprise semantic properties of the user query.

The ontology of the knowledge graph may comprise formal schema or conceptual model that defines how entities (nodes) and their relationships are represented within the graph. The ontology may of the knowledge graph specify types of nodes e.g., equipment, processes, sensors, allowed relationships e.g., "monitors," "controls," "is part of", data types, and constraints. It may be a structural and semantic foundation of the knowledge graph.

The semantic properties of the plurality of nodes may comprise classifications assigned to the nodes within the knowledge graph. These may comprise types e.g., "Centrifugal Pump", roles e.g., "Cooling Component", functions e.g., "Heat Transfer", or domain-specific tags that define the nodes' identity and purpose in the industrial plant.

The contextual relationships between the user query and the plurality of nodes may describe connections established during query processing. These relationships may be derived from interpreting the user's intent and mapping relevant elements of the query-such as terms, constraints, or references-to the semantically and operationally relevant nodes in the knowledge graph. These relationships may determine which nodes are contextually appropriate to answer or act on the query.

The properties of the user query may comprise semantic properties determining intended meaning of the query. These semantic properties may reflect the type of information requested e.g., "operational status", the domain-specific concepts invoked e.g., "reactor efficiency", or the role of entities being queried e.g., "fault cause".

The properties of the user query refer to its defining characteristics, comprising:
- Intent, e.g., retrieval, comparison, execution
- scope, which part of the knowledge graph it targets
- format, structured, semi-structured, or natural language, and
- constraints e.g., filters, conditions, or time ranges.

These properties guide how the query is parsed, matched to the knowledge graph, and resolved by the underlying system in the context of the industrial plant.

This method may enrich the information within the knowledge graph using the executable nodes based on the properties of the knowledge graph, enabling actionable insights for the user. It may provide a smarter, more intelligent knowledge graph that assists the user in making informed decisions.

Preferably, the algorithm may comprise a machine learning, ML, model and/or an artificial intelligence, AI, model.

Using the knowledge graph may be beneficial during operations of the industrial plants as it provides an overview of what assets the plants have and what process data is generated. However, for actionable insights the knowledge graphs may need to be enriched with some statistical algorithms or machine learning, ML, artificial intelligence AI, or generative artificial intelligence, GenAI methods to get more beneficial output for the user.

The statistical information however often is not available or usable, as it may require extensive data curation efforts and actual stats, ML or AI knowledge to derive it based on the possibly often even "available" data points.

The algorithm of at least one executable node may be a pre-defined sequence of computational steps or logical rules designed to solve a specific problem, perform data analysis, or execute a task such as anomaly detection, process optimization, or fault diagnosis. Algorithms may be implemented as rule-based logic, statistical procedures, or embedded in software systems that operate on plant data.

A machine learning, ML, model may be a computational construct trained on historical or real-time data to identify patterns, make predictions, or classify input related to industrial application. The model may be generated by applying a machine learning algorithm to data, resulting in a machine learning, ML model generalizing from examples rather than following explicit rules. Examples comprise models predicting equipment failure or optimizing process parameters.

An artificial intelligence, AI, model may be a computational system simulating intelligent behavior by reasoning, learning, or making decisions based on data. This may comprise rule-based systems, natural language processing models, or deep learning systems that interpret sensor data, assist in troubleshooting, or interact with users. An AI model may incorporate one or more machine learning models as part of its reasoning framework.

The algorithm may comprise a software tool for simulation execution. The software tool according to this aspect of the invention may comprise a digital application performing a specific function related to data processing, visualization, modeling, control, or integration with physical systems.

The algorithm, as applied in the executable node, may comprise or be implemented using a machine learning model, an artificial intelligence model, and/or a software tool. It may recognize the algorithmic logic being embedded within or executed through one or more of these components.

More precisely, a set of ML models or algorithms may be provided to be executable on knowledge graph nodes, whereby each knowledge graph may be taken as the respective "center", around which all the neighboring nodes (i.e., the related concepts and their related concepts) are taken into consideration along with their respective instance data in the knowledge graph.

The neighboring concept may comprise a node that is directly or indirectly connected to a central node-such as a specific equipment component, process variable, or operational event-through one or more semantic or functional relationships. The neighboring concept may extend beyond immediate connections to include layers of related concepts that carry meaningful associations with the central node. For instance, if the central node represents a pump, its neighboring concepts might include the flow sensor that monitors it, the upstream valve controlling input, the alarm conditions associated with pressure drops, and even historical failures in similar pump types. The inclusion of these neighboring concepts and their instance data may enable ML models to learn from not only local but also contextual information within the graph.

For the respective ML algorithms, the instance data of concepts and neighboring concepts may correspond to data rows similar to in a panda DataFrame. However, the instance data may be linked not by means of a row index, but by means of a concept and the instance index. Data points required to successfully execute the ML model should be connected to a ML model node. There may be a mechanism connecting the data points to the ML model node to executable nodes together comprising multi-node pattern analysis, multi-node principal component analysis. In an example the mechanism may comprise fetching required data from the neighbouring connected nodes, preprocessing the data and executing the ML model and finally giving the results so that next nodes can be selected.

Furthermore, the users may define rules in the knowledge graph to execute certain algorithms or models based on certain conditions.

Preferably, the algorithm may comprise a pattern analysis, a root cause analysis, a principal component analysis, an action recommendation, a what-if-analysis, a simulation execution, and/or a data extractor tool.

The algorithm, as applied in the executable node, may comprise one or more components for pattern analysis, root cause identification, dimensionality reduction or important impact factors identification via principal component analysis, PCA, generation of recommended actions, evaluation of hypothetical scenarios, running of simulations, and/or tools for extracting data from knowledge graph.

The pattern analysis may comprise detecting patterns, e.g., for completion, extrapolation and/or interpolation of data points. It may comprise identification and interpretation of recurring trends, correlations, or sequences in operational data, such as sensor readings, process variables, or maintenance records. It may be used to detect normal or abnormal behavior of the entities in plant systems by analyzing temporal, spatial, or categorical data structures.

The root cause analysis may comprise analyzing root causes or influence factors. It may be a systematic method used in an industrial plant to identify the underlying cause(s) of faults, failures, or inefficiencies. It may comprise tracing observed issues-such as equipment malfunction or quality deviation-back through process data, maintenance history, and operational conditions to determine originating factors.

The principal component analysis, PCA, may comprise finding main influence factors. It may be a statistical technique used in industrial plants to reduce the dimensionality of large datasets while preserving the most significant variance. It may transform correlated process variables into a smaller set of uncorrelated (sometimes abstract) components, making it easier to visualize and analyze complex process behavior, particularly in multivariate systems.

With expert models on nodes of the graph, each executable node may comprise a PCA in sense of a "bouncer", which allows only cause and effect (C&E) for the important, principal components, causes or influence-factors. PCA may reduce dimensionality of the executable nodes and edges to get the most important nodes and edges and thereby paths to flow through.

The action recommendation may comprise drawing conclusions from represented data or for completion of information. It may be an output of a decision-support system or algorithm suggesting specific operational or maintenance actions based on current data, past events, or model predictions. These recommendations may address optimization, risk mitigation, or failure prevention.

The what-if analysis may be a scenario-based evaluation method used in industrial plants to assess the potential outcomes of hypothetical changes in process variables, configurations, or decisions. It may allow the users to simulate the effects of actions such as parameter adjustments or equipment shutdowns without implementing them in the real system.

The simulation execution may comprise running a digital model of a process, system, or workflow to replicate behavior of the entities. This execution may enable validation of process strategies, evaluation of performance, or testing of control logic without affecting actual operations.

The data extractor tool may be a software component or utility used to retrieve structured or unstructured data from various sources such as sensors, databases, and/or logs. It may standardize, format, and prepare the retrieved data for use in analytics, modeling, or reporting systems.

This method may enrich the information within the knowledge graph using the executable nodes being configured to perform pattern analysis, root cause analysis, principal component analysis, action recommendation, what-if-analysis, simulation execution, and/or data extraction, enabling actionable insights for the user. It may provide a smarter, more intelligent knowledge graph that assists the user in making informed decisions.

Preferably, the executable knowledge graph and the association between the at least two nodes of knowledge graph may be provided by an output unit to the user. The association may comprise semantic, linear, anti-proportional or domain specific relationship between the at least two nodes of knowledge graph.

The executable knowledge graph comprising the executable nodes and the association between the at least two nodes may be provided to the user through the output unit.

The association between two nodes in the industrial knowledge graph may comprise various forms, comprising semantic, linear, anti-proportional or domain-specific relationships. These associations may determine how nodes are logically or quantitatively connected within the knowledge graph.

The semantic relationship between at least two nodes of the knowledge graph may comprise a meaning-based connection reflecting roles, classifications, or ontological associations between the entities they represent. In an industrial plant, this may comprise relationships such as "is a type of," "performs," or "belongs to system," allowing the graph to represent structured domain knowledge in a machine-readable way.

The linear relationship between at least two nodes of the knowledge graph may represent a direct, proportional correlation between the values or states of the associated entities. In an industrial plant, this may describe situations where an increase in one process variable e.g., flow rate leads to a proportional increase in another e.g., pressure, and the nodes may reflect this quantitative dependency.

The anti-proportional relationship between at least two nodes of the knowledge graph may comprise a mathematical or operational connection where an increase in one entity's value corresponds to a decrease in the other. In an industrial plant context, this may describe phenomena such as "as cooling water flow increases, reactor temperature decreases," indicating an inverse dependency between two process variables.

The domain-specific relationship between at least two nodes of the knowledge graph may comprise a specialized connection that is unique to the operational context, processes, or standards of the industrial plant. The domain may refer to the specific area of expertise, operations, or functional scope to which the knowledge graph and its components apply.

This method may enrich the information within the knowledge graph using the executable nodes enabling actionable insights for the user by the executable knowledge graph and the association between the at least two nodes of knowledge graph. The provided knowledge graph may assist the user in making informed decisions.

Preferably, validation data may be received by the input unit from the user. The validation data may comprise an edited version of the provided executable knowledge graph. Further, the association between the at least two nodes of knowledge graph may be adapted by the processing unit based on the validation data.

The validation data may be received by the input unit from the user.

The user may provide the validation data through an input unit, in a form of modifications to the executable knowledge graph. This data may be used by the processing unit to update or refine the relationships between nodes, allowing the industrial application to remain aligned with user input or operational changes.

This may be a process by which the user e.g., an engineer or an operator submits a validation data through the input unit for the purpose of confirming, correcting, or refining the knowledge graph.

The validation data may comprise an edited version of the provided executable knowledge graph.

The validation data provided by the user may comprise a modified form of the executable knowledge graph, comprising changes to the nodes, relationships, metadata, algorithms or executable logic reflecting corrected information, and/or revised process configurations.

The association between the at least two nodes of the knowledge graph may be adapted by the processing unit based on the validation data:
Adaption of the association between at least two nodes may comprise dynamic adjustment of relationships between nodes within the knowledge graph by the processing unit, using the validation data received from the user. Such adaptation may comprise redefining, changing or removing relationships between nodes based on the validation data.

This method may enrich the information within the knowledge graph using the validation data provided by the user comprising the edited version of the provided executable knowledge graph. The adapted executable knowledge graph based in the validation data may assist the user in making informed decisions.

Preferably, the industrial application may be in a Process Automation Engineering, P&A Eng or Operations domain.

The domain may comprise Process Automation Engineering, P&A Eng or Operations. Further, it may comprise sectors such as chemical processing, power generation, water treatment, or manufacturing, and encompasses the vocabulary, entities, processes, data models, and rules that are characteristic of that area. The domain may define boundaries and context for how knowledge is structured, interpreted, and utilized within the plant's digital and operational systems.

The executable knowledge graph of the industrial application may be used in following scenarios:
- In Engineering, when extracting from documents the structured knowledge graph representation, then the executable models could help to "fill" information, e.g., when a symbol is not clearly detectable.
- In Operations, when a "root cause" is needed to be analyzed or "what if" scenario.
- In Operations, for alarm flood handling, where tons of alarms are shown to the operator in a critical situation and they are unsure which alarm to cater first, an executable knowledge graph especially, a principal component analysis, PCA algorithm may help derive those with statistically highest relevance.

Preferably, the industrial application may comprise Data Processing for Engineering.

The industrial application may comprise Data Processing for Engineering, which comprise handling, transformation, and analysis of engineering and operation related data to support design, validation, operation, and documentation tasks. Furthermore, it may comprise processing structured and unstructured data from sources such as P&IDs, control narratives, IO lists, simulation models, and configuration files, with the goal of extracting relevant information, ensuring data consistency, and enabling its integration into digital systems such as knowledge graphs or engineering tools.

In an example, the method may be based on a system to read, parse and process engineering design specification data, which, e.g., describe how a process plant shall be built and configured, and which therefore comprehensively analyzes, transforms and conflates this data into a structured representation which is (at least partly) consistent with a domain information model or knowledge graph. It may thus be obtained a formalized, structured, comprehensive representation of the original input data, which, e.g., populates an ontology, thereby forming an extension of a knowledge graph. Or the method may be based on a system which supports the plant operator/owner during operation of the plant, e.g., in the handling of alarms and events, e.g., in an alarm flooding use case, where tons of alarms are shown to the user in a critical situation and prioritization of the alarms is not possible. Thus, the user is unsure which alarm to cater first.

Preferably, the knowledge graph may be determined based on a piping and instrumentation diagram, P&ID data, control narratives, input output, IO, lists, alarm and events, time series data, domain knowledge, historical data of the industrial application and/or user pre-defined data.

Structure and content of the knowledge graph may be derived from a variety of engineering and operational data sources used in the industrial plant. These sources may provide formal and informal definitions of equipment, process logic, control behavior, and historical performance, which are then translated into semantically meaningful nodes and relationships within the knowledge graph.

Additionally, the industrial application may incorporate data processing to support engineering tasks and that the knowledge graph can be constructed using a variety of plant-specific data sources comprising engineering documents, real-time signals, event logs, domain standards, and user input-to form a comprehensive digital representation of the plant.

The piping and instrumentation diagram, P&ID data may be a graphical representation of the physical layout and logical relationships of entities comprising piping, equipment, instrumentation, and control systems within an industrial plant. It may be provided as an engineering document defining how process systems are interconnected and operated and is often used as a foundational input for constructing the knowledge graph.

The control narratives may be structured textual documents describing intended control logic, operating sequences, and automation strategies for specific plant systems or processes. The control narratives may define how control system should respond to various conditions and inputs and may be used to extract logic-based relationships and functional behaviors for inclusion in the knowledge graph.

The input/output, IO lists may be tabular datasets representing detail digital and analog signals exchanged between the plant's control system and field devices such as sensors and actuators. These lists may specify signal types, addressing, tag names, and descriptions, and are critical for mapping instrumentation and automation structures into the knowledge graph.

The alarm and event data may comprise logs generated by the control system of the industrial plant indicating abnormal conditions e.g., alarms or significant operational activities e.g., events within the industrial plant. The alarm and event data may comprise temporal and causal relationships between plant's states and are used to identify key interactions and dependencies in the knowledge graph.

The time series data may comprise continuous or periodic measurements of process variables e.g., temperature, pressure, flow collected over time. The time series data may be generated by the sensors and stored in historians or databases.

The domain knowledge may represent the specialized expertise, rules, and concepts associated with specific type of industrial plant, such as power generation, oil refining, or water treatment. It may provide context for interpreting data and defining meaningful nodes and relationships between the nodes in the knowledge graph.

The historical data of the industrial application may comprise previously collected operational data, logs, maintenance records, and process performance indicators. This data may provide insight into long-term behavior and system evolution and may be used to inform the structure and content of the knowledge graph by identifying patterns, associations, and lifecycle changes.

The user pre-defined data may comprise any custom information manually provided by the user to define or correct the knowledge graph. This may comprise annotations, rules, templates, or configurations that reflect plant-specific insights or user-specific goals. The user pre-defined data may enable customization of the knowledge graph to meet particular engineering or operational needs.

Preferably, the knowledge graph may be determined based on data comprising a plurality of data types or modalities, wherein the modalities comprise at least one of structured data, unstructured data, textual data, image data, audio data, time series or numerical data.

The knowledge graph may be generated using heterogeneous data originating from multiple formats or sources. These data modalities may comprise structured data such as sensor logs and databases, unstructured data such as free-form reports or maintenance logs, textual data from documents like control narratives, image data such as equipment diagrams or photographs, audio data such as operator recordings or alarm sounds, time series data from continuously recorded process variables, and numerical data representing quantitative process metrics. All these modalities may be interpreted and integrated into a unified knowledge graph to represent the operational and contextual knowledge of the plant.

The knowledge graph and its contained information may be multimodal comprising text, numbers, time series, or images.

The algorithms and/or software on the executable nodes may be setup accordingly to process the multimodal data and information.

This method may enrich the information within the knowledge graph using the plurality of data types or modalities.

Preferably, the knowledge graph may comprise a root cause graph of a problem, wherein the plurality of nodes comprises a plurality of problem nodes, indicating a definition of the problem, and a plurality of root cause nodes, representing a plurality of root causes to the problem, and action nodes, indicating an action to be taken, and wherein the at least one executable node comprises an executable sensor node, being configured to determine an association between at least one of the plurality of problem nodes and at least one of the plurality of root cause nodes, and an executable action node, being configured to determine an association between at least one of the plurality of root cause nodes and at least one of the plurality of action nodes.

The knowledge graph may comprise a root cause graph of a problem modeling logical structure of a known or detected problem. The root cause graph may represent relationships between problem itself, its possible underlying causes, and corresponding corrective or mitigating actions, enabling structured analysis and decision-making.

The knowledge graph may comprise a specialized subgraph referred to as a root cause graph.

The knowledge graph may comprise plurality of problem nodes, indicating a definition of the problem. The plurality of problem nodes in the knowledge graph may represent a specific aspect or formulation of an observed or reported issue in the plant. These nodes collectively may define the problem through descriptions, affected systems, abnormal conditions, or triggering symptoms based on real-time or historical plant data.

The plurality of root cause nodes may represent a plurality of root causes to the problem.

The plurality of root cause nodes in the knowledge graph may determine different potential or confirmed underlying causes of the problem. Each root cause node may correspond to a specific failure mode, deviation, or contributing factor e.g., equipment malfunction, incorrect control logic, or sensor drift, being linked logically to the problem nodes.

The action nodes may indicate the action to be taken.

The action nodes in the knowledge graph may comprise specific interventions, responses, or operational steps that may be performed to address one or more root causes. These nodes may define actionable items, such as maintenance tasks, control parameter adjustments, or system restarts, being part of the recommended solution pathway.

The executable sensor node may be configured to determine the association between at least one of the plurality of problem nodes and at least one of the plurality of root cause nodes.

The executable sensor node may be a functional element in the knowledge graph configured to analyze live or historical sensor data to establish or validate a connection between problem nodes and root cause nodes. It may perform data-driven evaluations e.g., pattern recognition or threshold checks, providing automated diagnostic reasoning.

The executable action node may be configured to determine an association between at least one of the plurality of root cause nodes and at least one of the plurality of action nodes.

The executable action node may be a computational component in the knowledge graph designed to identify appropriate actions linked to specific root causes.

The method may provide a structured, problem-solving framework within the knowledge graph interconnecting nodes represent problems, their root causes, and possible actions.

The root cause graph may need a plurality of data sources being used for generation of the knowledge graph. These data sources may comprise alarms and events, domain knowledge and/or operator experience.

The alarms and events may comprise a plurality of alarms, being pre-defined in a 800xA system and also in the plant process manual.

Th domain knowledge may comprise known situations that may happen and possible root causes for the same situations based on the plant process.

The operator experience may comprise experience of the user while running the plant being available in operator notes, setpoint changes in the plant or may be asked from the user directly.

Based on the respective problem scenarios, a root cause graph may be generated using the data sources.

The root cause graph may comprise problem nodes, sensor nodes, root cause nodes and action nodes.

The problem node may comprise the definition of the problem.

The sensor node may be used to match a state of the plant to a particular expression to determine if the state may represent the problem node being attached to.

The root cause node may be a plurality of nodes representing different root causes to the detected problem based on a detected problem.

The action node may define an action to be taken to resolve the root cause of the problem.

The root cause graph may be static and may provide for a specific detected problem a plurality of root causes and the plurality of root causes may be provided to the user.

To determine a single root cause to the specific detected problem, further analysis may be needed comprising a set of if-else conditions and may result in a very lengthy hard to traverse knowledge graph.

The root cause graph may provide for a specific sensor a problem/root cause expression changing over time or it may need being more dynamic to other state. In a nutshell, it may should being updated regularly, otherwise the graph may tend to be outdated.

To make the root cause graph more dynamic, the knowledge graph may comprise at least one executable node being configured to determine a path to a right node given a starting point in the knowledge graph.

A pre-defined root cause analysis graph may be provided comprising executable sensor nodes and executable action nodes.

The executable sensor nodes may be data driven machine learning, ML models such as anomaly classification models which can be used to derive the path to the specific root cause and corresponding actions. These nodes may comprise executing mathematical expression or calling a relevant database.

The executable action nodes may be used to run simulations or surrogate models to determine if the recommended action will work. The surrogate may determine what values causing the recommended action work.

The simulation may be set up or fed by mining contents of neighboring nodes describing simulation parameters and accordingly may comprise suitable simulation scenarios set up for being executed. Respective simulation results may be feed back into the knowledge graph.

According to this aspect of the invention, a method of enriching the information in the knowledge graph with executable nodes to get actionable insights from the knowledge graph to the user is provided. The actionable insights may comprise certain rules defined in the graph by the user to execute certain algorithms or models based on certain conditions.

According to another aspect of the invention a method for generating an executable knowledge graph is provided.

In a step of the method, a knowledge graph reflecting the industrial application is generated by a process unit. The knowledge graph is generated based on at least one data source related to the industrial application, wherein the at least one data source comprises ontologies and/or information models representing entities of the industrial application and relationships between the entities, wherein the knowledge graph comprises a plurality of nodes and relationships between the plurality of nodes.

In an example the knowledge graph may be generated through pattern or correlation analysis.

In next step of the method, the knowledge graph is extended to an executable knowledge graph by the process unit according to the previous aspect of the invention.

The existing graph describing a certain domain of interest may be extended by analyzing how different nodes are related to each other., i.e., in which relation they stand to each other. In an example, there may be nodes A, B, C, D, E in a knowledge graph. However, the knowledge graph may represent only nodes A and B related to each other by a knowledge graph given relation. The knowledge graph may not describe anything about the nodes C, D and E and their relationships. Hence, an executable pattern or correlation analysis node may analyze how the nodes C, D, E are respectively related to nodes A and/or B, and once relations are found. The node C may be linearly related to the node B, and the node D may be related by an XOR relation to the node A.

Then, the nodes C, D, E may be added to the knowledge graph, extending the knowledge graph.

The knowledge graph may be based on a domain information model, domain knowledge graph e.g., from an Engineering Data processing use case, or from an operator support use case such as Alarm-Management.

According to another aspect of the invention device is provided. The device comprises one input unit, one process unit and one output unit. The device is configured to carry out the method for determining an executable knowledge graph and/or the method for generating an executable knowledge graph.

The input unit is configured to obtain the knowledge graph reflecting the industrial application. Further, the input unit is configured to receive a user query and/or a validation data of a user.

The process unit is configured to generate a knowledge graph reflecting the industrial application, the knowledge graph being generated based on at least one data source related to the industrial application.

The process unit is further configured to extend the knowledge graph to an executable knowledge graph by determining at least one node of the knowledge graph to be an executable node and to convert it into an executable node for the knowledge graph. In addition, the process unit is configured to adapt the association between the at least two nodes of knowledge graph based on the validation data.

The output unit is configured to provide the executable knowledge graph and the association between the at least two nodes of knowledge graph to the user.

According to another aspect of this disclosure, there is provided a computer program product comprising instructions which, when executed by a computer, causes the computer to carry out the steps of the method for determining an executable knowledge graph and/or the method for generating an executable knowledge graph.

The computer program product may be a computer program or computer programs as such, meaning a computer program consisting of or comprising program code to be executed by the data processing apparatus, in particular computer. Alternatively, the computer program product may be a product such as a data storage, in particular computer-readable data storage medium, on which the computer program may be temporarily or permanently stored.

There may be provided a data processing system configured to carry out the method. For example, the data processing system may comprise the computer program product or at least be connected to it such that it may execute the instructions of the computer program.

According to an aspect of this disclosure, there is provided a computer-readable medium comprising instructions which, when executed by a computer, cause the computer to carry out the method for determining an executable knowledge graph and/or the method for generating an executable knowledge graph.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

In the following, the invention is illustrated using Figures without any intention to limit the scope of the invention. The Figures show:
Fig. 1a: shows a flow chart of a method for determining an executable knowledge graph in an industrial application;
Fig. 1b: shows a flow chart of a method for generating an executable knowledge graph in an industrial application;
Fig. 2: shows a schematic representation of an example knowledge graph in an industrial application;
Fig. 3: shows a schematic representation of an executable node connecting two groups of nodes in an executable knowledge graph;
Fig. 4: shows a schematic representation of executable knowledge graph of an industrial application; and
Fig. 5: shows a schematic representation of a device for determining an executable knowledge graph and/or for generating an executable knowledge graph.

The Figures are schematic only and not true to scale. In principle, identical or like parts, elements and/or steps are provided with identical or like reference numerals in the Figures.

### DETAILED DESCRIPTION OF THE INVENTION

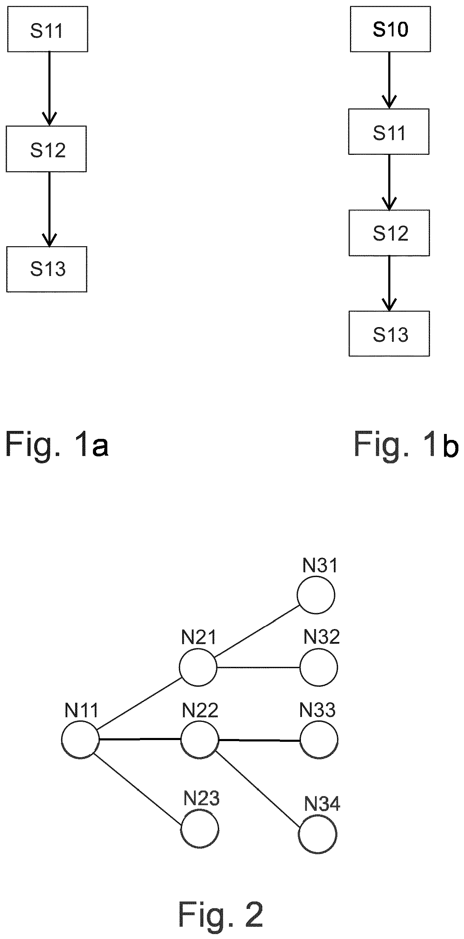

Fig. 1a shows a flow chart of a method for determining an executable knowledge graph EKG in an industrial application.

In a step of the method S11, a knowledge graph KG reflecting the industrial application is obtained by an input unit 10, wherein the knowledge graph KG comprises a plurality of nodes and a relationship between the plurality of nodes.

In next step S12, a user query of a user is received by the input unit 10, wherein the user query is configured to extract knowledge from the knowledge graph KG.

In next step S13, the knowledge graph KG is extended by a process unit 20 to an executable knowledge graph EKG determining at least one node of the knowledge graph KG to be an executable node and converting it into an executable node for the knowledge graph KG based on properties of the knowledge graph KG and/or the properties of the user query. The at least one executable node is connecting at least two nodes of knowledge graph KG. The at least one executable node is configured to execute an algorithm determining an association between at least two nodes of knowledge graph KG.

Fig. 1b shows a flow chart of a method for determining an executable knowledge graph EKG in an industrial application.

Fig. 1b provides a method for generating an executable knowledge graph EKG. The method comprises the method for determining an executable knowledge graph EKG in an industrial application in Fig. 1a and an extra step for generating the knowledge graph KG of the industrial application.

In a step of the method S10, a knowledge graph KG reflecting the industrial application is generated by a process unit 20. The knowledge graph KG is generated based on at least one data source related to the industrial application, wherein the at least one data source comprises ontologies and/or information models representing entities of the industrial application and relationships between the entities, wherein the knowledge graph KG comprises a plurality of nodes and relationships between the plurality of nodes.

In next steps of the method S11-S13, the knowledge graph KG is extended to an executable knowledge graph EKG by the process unit 20 according to the method of Fig. 1a.

Fig. 2 illustrates a schematic representation of an example knowledge graph KG in an industrial application. The knowledge graph KG is determined based on a piping and instrumentation diagram, P&ID data, control narratives, input output, IO, lists, alarm and events, time series data, domain knowledge, historical data of the industrial application and/or user pre-defined data.

The knowledge graph KG in Fig. 2 comprises a root cause analysis knowledge graph KG comprising three groups of nodes connecting with each other.

Nodes of knowledge graph KG represent entities comprises machines and equipment, sensors, processors, materials, personnel, locations, and/or alarms in an industrial plant.

First group of nodes comprises a problem alarm node N11. Second group of nodes comprises three Root cause nodes N21, N22 and N23. Third group of nodes comprises four Action nodes comprising N31, N32, N33, and N34.

The knowledge graph KG of root cause analysis in Fig. 2 presents a plurality of Root causes and respective Actions to the user, However, the user is uncertain about which action to choose.

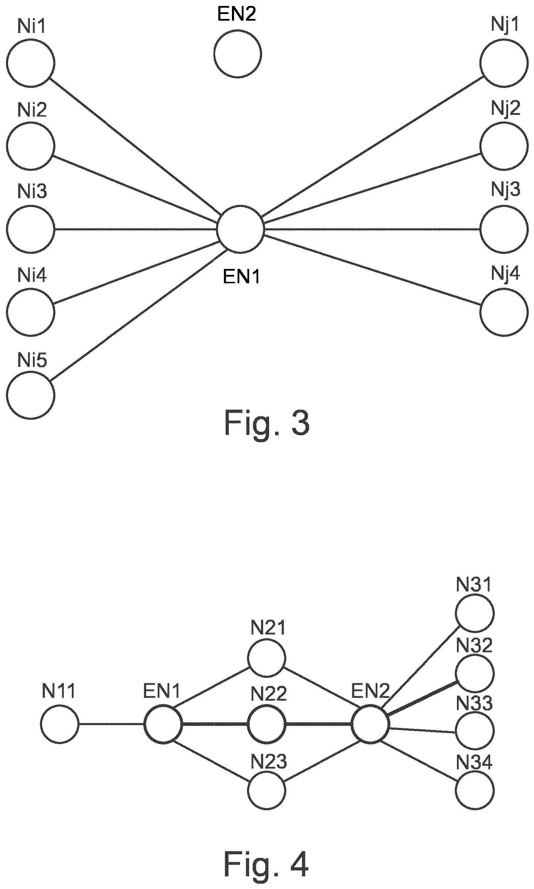

Fig. 3 illustrates schematic representation of an executable node EN1 connecting two groups of nodes in an executable knowledge graph EKG. The executable node EN1 is arranged between a first and a second groups of nodes.

An executable node EN1 is configured to execute an algorithm determining an association between i-th group of nodes Ni1-Ni5 to j-th group of nodes Nj1-Nj4. In other words, the executable node EN1 connects the i-th group of nodes Ni1-Ni5 to the j-th group of nodes Nj1-Nj4.

The executable node EN1 may be connected to another executable node EN2. The connected executable nodes EN1, EN2 may consume results from each other.

In an example, the executable node EN1 may be a PCA is reducing dimensionality and finding the "really important impact factors", and the other executable node EN2 thereon-based may execute a decision-tree-based recommendation algorithm (i.e., decision-tree on the "abstract" principal components).

Fig. 4 illustrates a schematic representation of an example extended knowledge graph EKG in an industrial application comprising two executable nodes.

The knowledge graph KG in Fig. 4 comprises an executable root cause analysis knowledge graph KG of a problem, wherein the plurality of nodes comprises a plurality of problem nodes, indicating a definition of the problem, and a plurality of root cause nodes, representing a plurality of root causes to the problem, and action nodes, indicating an action to be taken, and wherein the at least one executable node comprises an executable sensor node, being configured to determine an association between at least one of the plurality of problem nodes and at least one of the plurality of root cause nodes, and an executable action node, being configured to determine an association between at least one of the plurality of root cause nodes and at least one of the plurality of action nodes.

In this example, the knowledge graph KG shown in Fig. 2 has been extended to an extended knowledge graph EKG by adding two executable nodes EN1, EN2. The two executable nodes EN1, EN2 are connecting at least two nodes of knowledge graph KG. First executable node EN1 is arranged between the first group of nodes N1 1 and second group of nodes N21-N23, while second executable node EN2 is arranged between the second group of nodes N21-N23 and third group of nodes N31-N34.

Each of the two executable node EN1, EN2 is configured to execute an algorithm determining an association between two groups of nodes of knowledge graph KG.

The algorithm of the first executable node EN1 is a machine learning model for problem analysis and the second executable node EN2 a machine learning model for what-if-analysis or for simulation execution.

The executable Root cause knowledge graph KG provides a relevant Root cause and actions to the user.

In this example, the first executable node EN1 determines an association between node N11 and N22, identifying the relevant Root case. The second executable node EN2 determines an association between node N22 and N23, indicating the action to be taken for the user.

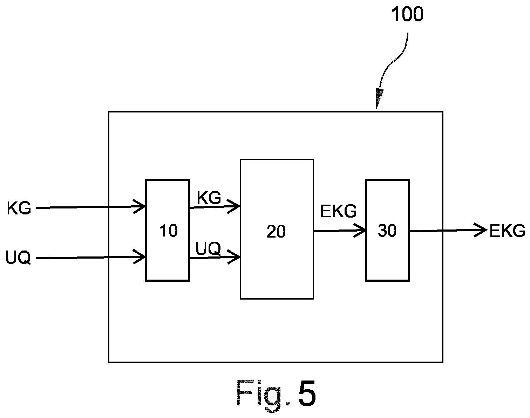

Fig. 5: shows a schematic representation of a device 100 for determining an executable knowledge graph EKG and/or for generating an executable knowledge graph EKG. The device 100 comprises one input unit 10, one process unit 20 and one output unit 30. The device 100 is configured to carry out the method for determining an executable knowledge graph EKG and/or the method for generating an executable knowledge graph EKG.

The input unit 10 is configured to obtain the knowledge graph KG reflecting the industrial application. Further, the input unit 10 is configured to receive a user query UQ.

The process unit 20 is configured to obtain a knowledge graph KG from the input unit 10 or to generate a knowledge graph KG reflecting the industrial application, the knowledge graph KG being generated based on at least one data source related to the industrial application.

The process unit 20 is further configured to extend the knowledge graph KG to an executable knowledge graph EKG by determining at least one node of the knowledge graph KG to be an executable node and to convert it into an executable node for the knowledge graph KG. In addition, the process unit 20 is configured to adapt the association between the at least two nodes of knowledge graph KG based on the validation data.

The output unit 30 is configured to provide the executable knowledge graph EKG and the association between the at least two nodes of knowledge graph to the user.

As used herein, the word "comprise" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods, steps and other features herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any reference signs in the claims should not be construed as limiting the scope.

### List of reference signs

- 10: input unit
- 20: process unit
- 30: output unit
- 100: device
- EKG: executable knowledge graph
- EN, EN1, EN2: executable nodes
- KG: knowledge graph
- N11: first group of nodes
- N21-N23: second group of nodes
- N31-N34: third group of nodes
- Ni1-Ni5: i-th group of nodes
- Nj1-Nj4: j-th group of nodes
- S10-S13: steps of the method
- UQ: user query

## Claims

1. A computer implemented method for determining an executable knowledge graph (EKG) in an industrial application, the method comprises:
obtaining (S11), by an input unit (10), a knowledge graph (KG) reflecting the industrial application, wherein the knowledge graph (KG) comprises a plurality of nodes and relationships between the plurality of nodes;
receiving (S12), by the input unit (10), a user query of a user, wherein the user query is configured to extract knowledge from the knowledge graph (KG);
extending (S13), by a process unit (20), the knowledge graph (KG) to an executable knowledge graph (EKG) by determining at least one node of the knowledge graph (KG) to be an executable node and converting it into an executable node for the knowledge graph (KG) based on properties of the knowledge graph (KG) and/or properties of the user query;
wherein the at least one executable node is connecting at least two nodes of knowledge graph (KG);
wherein the at least one executable node is configured to execute an algorithm determining an association between at least two nodes of knowledge graph (KG).

2. The method of claim 1,
wherein the properties of the knowledge graph (KG) comprise at least one of ontology of the knowledge graph (KG), semantic properties of the plurality of nodes and contextual relationships between the user query and the plurality of nodes, and
wherein the properties of the user query comprise semantic properties of the user query.

3. The method of any one of the preceding claims,
wherein the algorithm comprises a machine learning, ML, model, and/or an artificial intelligence, AI, model.

4. The method of any one of the preceding claims,
wherein the algorithm comprises a pattern analysis, a root cause analysis, a principal component analysis, PCA, an action recommendation, a what-if-analysis, a simulation execution, and/or a data extractor tool.

5. The method of any one of the preceding claims, comprising:
providing, by an output unit (30), the executable knowledge graph (EKG) and the association between the at least two nodes of knowledge graph (KG) to the user;
wherein the association comprises semantic, linear, anti-proportional or domain specific relationship between the at least two nodes of knowledge graph (KG).

6. The method of claim 5, comprising:
receiving, by the input unit (10), validation data from the user, wherein the validation data comprises an edited version of the provided executable knowledge graph (EKG); and
adapting, by the processing unit, the association between the at least two nodes of knowledge graph (KG) based on the validation data.

7. The method of any one of the preceding claims,
wherein the industrial application is in a Process Automation Engineering, P&A Eng or Operations domain.

8. The method of claim 7,
wherein the industrial application comprises Data Processing for Engineering.

9. The method of any one of the preceding claims,
wherein the knowledge graph (KG) was determined based on a piping and instrumentation diagram, P&ID data, control narratives, input output, IO, lists, alarm and events, time series data, domain knowledge, historical data of the industrial application and/or user pre-defined data.

10. The method of any one of the preceding claims,
wherein the knowledge graph (KG) was determined based on data comprising a plurality of data types or modalities, wherein the modalities comprise at least one of structured data, unstructured data, textual data, image data, audio data, time series or numerical data.

11. The method of any one of the preceding claims,
wherein the knowledge graph (KG) comprises a root cause graph of a problem;
wherein the plurality of nodes comprises a plurality of problem nodes, indicating a definition of the problem, and a plurality of root cause nodes, representing a plurality of root causes to the problem, and action nodes, indicating an action to be taken; and
wherein the at least one executable node comprises an executable sensor node, being configured to determine an association between at least one of the plurality of problem nodes and at least one of the plurality of root cause nodes, and an executable action node, being configured to determine an association between at least one of the plurality of root cause nodes and at least one of the plurality of action nodes.

12. A method for generating an executable knowledge graph EKG, comprising:
generating (S10), by a process unit (20), a knowledge graph (KG) reflecting the industrial application, the knowledge graph (KG) being generated based on at least one data source related to the industrial application, wherein the at least one data source comprises ontologies and/or information models representing entities of the industrial application and relationships between the entities, wherein the knowledge graph (KG) comprises a plurality of nodes and relationships between the plurality of nodes;
extending, by the process unit (20), the knowledge graph (KG) to an executable knowledge graph (EKG) according to the method of claims 1-11.

13. A device (100) comprising means for carrying out the steps of the method of claims 1-12.

14. A computer program comprising instructions which, when the program is executed by a computer, cause the computer to carry out the steps of the method of claims 1-12.

15. A computer-readable medium comprising instructions which, when executed by a computer, cause the computer to carry out the steps of the method of claims 1-12.
